Europäisches Patentamt

European Patent Office

Office européen des brevets

(19)

(11) Publication number: **0 260 818**
**B1**

(12) # EUROPEAN PATENT SPECIFICATION

(45) Date of publication of the patent specification:
**28.11.90**

(51) Int. Cl.⁵: **G01M 3/24**

(21) Application number: **87307312.6**

(22) Date of filing: **19.08.87**

(54) Method and apparatus for detecting leaks in automotive vehicle bodies.

(30) Priority: **18.09.86 US 908621**

(43) Date of publication of application:
**23.03.88 Bulletin 88/12**

(45) Publication of the grant of the patent:
**28.11.90 Bulletin 90/48**

(84) Designated Contracting States:
**DE FR GB IT**

(56) References cited:
**BE-A- 901 230**
**DE-A- 2 854 238**
**DE-B- 2 823 976**
**FR-A- 2 310 558**

(73) Proprietor: **GENERAL MOTORS CORPORATION,**
**General Motors Building 3044 West Grand Boulevard,**
**Detroit Michigan 48202(US)**

(72) Inventor: **Blaser, Dwight Allen, 32362 Hampton Court,**
**Fraser Michigan 48026(US)**
Inventor: **Nemanis, Kestutis Petras, 19757 Sumner,**
**Redford Township Michigan 48240(US)**
Inventor: **Zik, James Joseph, 3565 Tienken Road,**
**Rochester Michigan 48063(US)**
Inventor: **Hess, Edward Charles, 34227 Glouster Circle,**
**Farmington Hills Michigan 48018(US)**

(74) Representative: **Denton, Michael John, Patent Section**
**Vauxhall Motors Limited 1st Floor Gideon**
**House 26 Chapel Street, Luton Bedfordshire**
**LU1 2SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a method and apparatus for detecting leaks in automotive vehicle bodies.

In the manufacture of automotive vehicles, it is necessary to inspect each vehicle for leaks so that any deficiencies in this respect can be corrected. Very small openings in door or window seals, as well as in sealant-filled joints between panels, can admit air or water, or may simply be the source of wind noise. Prior practice has been to spray water on a vehicle body, and locate any leakage visually. This requires, however, that the body be completed with all seals in place, but without the installation of seats and other soft trim liable to be damaged by leaking water. This severely restricts assembly procedures, as well as the inspection process. In addition, many leaks are not detectable by the use of the water test.

The present invention is concerned with the provision of a reliable and effective method and apparatus for detecting leaks in automotive vehicle bodies - which may be either open or closed - in any stage of their assembly.

To this end a method and apparatus in accordance with the present invention for detecting leaks in automotive vehicle bodies comprise the features specified in claim 7 and claim 1 respectively.

Attempts have previously been made to utilise ultrasonic leak detection procedures for the purpose of meeting an objective which is on the general lines of that just mentioned. Prior to the present invention, however, the application of ultrasonic procedures was limited to the inspection of closed bodies, and the ultrasonic procedures were ineffective for the detection of small leaks, especially those defining a tortuous path, such that the ultrasonic procedures did not provide acceptable inspection techniques, nor were they conducive to automated detection methods. Such an arrangement is disclosed in BE-A 901 230. In this case, ultrasonic emitters are fixed on spaced pillars to define a tunnel. A control unit drives the emitters to sweep the emitted energy through a band-width of 150 Hz having a centre frequency of the order of 39 to 40 kHz. An ultrasonic receiver is held by an operator and scanned along a predetermined inspection path inside a closed vehicle body, as it passes through the tunnel, to check for leaks.

US-A 2 738 237 represents a disclosure of a method and apparatus for ultrasonic testing that is stated to be applicable particularly to the ready and accurate location and inspection of separations or breaks in a pneumatic tire (tyre) carcass. In the drawings:

Figures 1 and 2 are perspective views of two forms of leak detection station equipped to practise the present invention;

Figure 3 is a block diagram of a leak detection system in conformity with the present invention;

Figure 4 is a block diagram of signal generating circuitry, including the waveforms produced, for practising the present invention;

Figure 5 is a view of an emitter and receiver in operating position in conformity with the present invention; and Figure 6 is an illustrative trace of ultrasonic energy detected by a receiver in conformity with the present invention.

In the assembly of a typical automotive vehicle, sheet metal panels are spot-welded together to form seams which are strong but not always water-tight. To preclude leaks, a bead of sealant - usually comprising a polymer - is applied over the seam.

To ensure proper sealing, it is desirable to test the integrity of the seal at an early stage of vehicle assembly, so that the seams are still accessible and necessary repairs can be made inexpensively. The test itself is often much easier if it is carried out before additional components are installed, and indeed the test may sometimes be possible only at this stage.

Another major reason for early inspection is to identify, as soon as possible, any assembly procedures that cause leaks. Fixed glass, such as the windshield (windscreen), is installed in a vehicle opening with the use of a polymer moulding and adhesive. Door openings are provided with weatherstripping, which can leak if not properly installed. Movable glass windows slidably fit into resilient channels to provide a seal. Each of these seals is subject to leaks, and must be inspected to ensure freedom from wind noise and from water or dust leakage.

Leaks are detected ultrasonically by exposing one side of a seal to ultra-sound and measuring the sound level on the other side. If the seal provides good sealing, only a low level of sound, or background noise, is detected, but if there is a leak a high level of sound is detected. With the use of a localised inspection zone, and with scanning of the zone along a seal, the detected signal peaks where a leak is encountered, and thus not only the existence of a leak but also the position of the leak can be determined.

To be practical in an automotive assembly application, the method must be practised with automatic equipment such as robots and other mechanisms for positioning the sources and receivers and scanning along the seals.

It is also desirable to be able to scan several regions simultaneously, so as to be able to complete the inspection quickly.

The ultrasonic source (emitter) may be either inside or outside the vehicle, with a microphone (acting as receiver) on the other side. It is preferred to place the receivers outside the vehicle, especially if the vehicle is a closed vehicle, for ease in collecting the signals and identifying which of several receivers is adjacent the leak. Robots move the receivers along programmed paths adjacent the seals, and the emitters are placed inside the vehicle either manually or automatically.

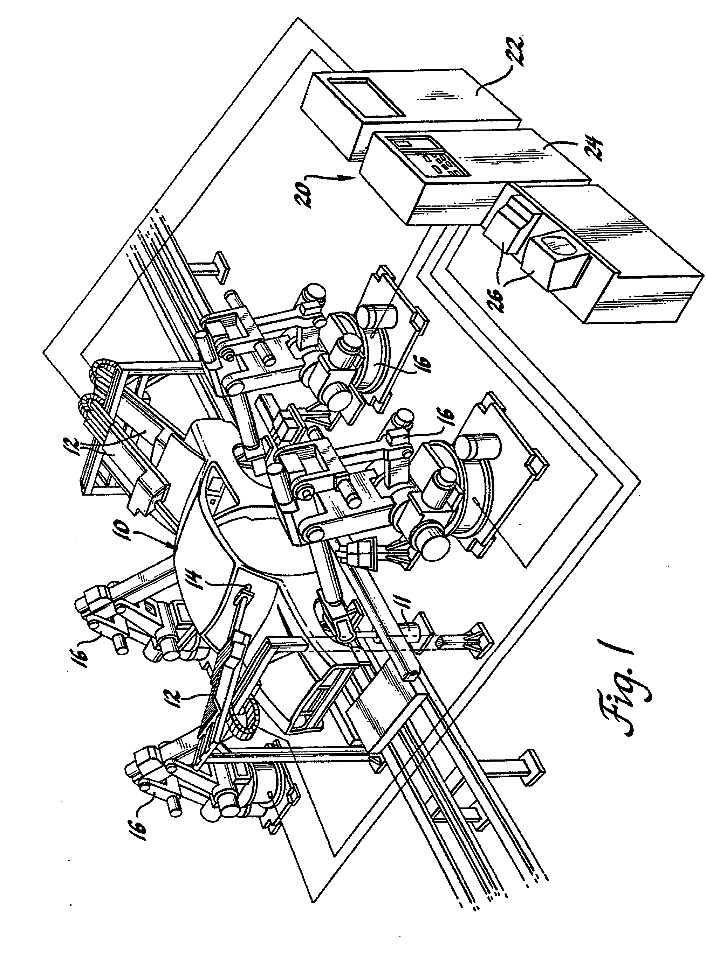

In the drawings, Figure 1 shows a partially assembled automobile (passenger car) body 10 without glass or doors, positioned in an inspection station equipped for underbody inspection. The body is elevated by lifts 11 to facilitate access to the underbody. Motor-driven slides 12 carrying ultrasonic emitters 14 intrude into the body through the windshield and backlight (rear screen) openings and into the trunk (boot) compartment, to strategically place the emitters for irradiation of the seals to be inspected. Two robots 16 on each side of the body manoeuvre receivers (not shown) along underbody seams, for seeking signals indicative of leaks. Electronic equipment 20 near the inspection station is coupled to the robots, the slides and the transducers to control the operation and analyse the resulting receiver signals. The equipment 20 includes a programmable controller 22 and a computer 24 with peripheral equipment 26.

In another station, after the windshield and backlight have been installed, equivalent equipment is used to insert emitters into the body through the door openings, and robots scan the receivers around the glass seals.

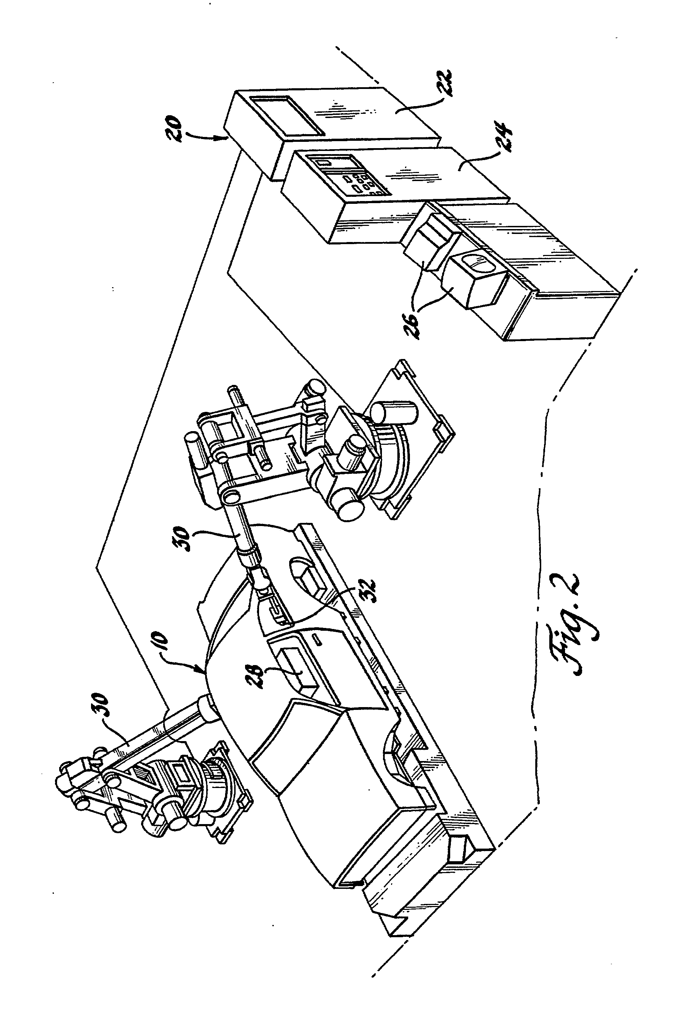

Figure 2 shows another inspection station for bodies that are completely closed with all glass in place. A battery-operated emitter assembly 28 is manually placed inside the vehicle body, and robots 30 with receivers 32 scan along the outside of the door and side window seals to complete the inspection by carrying out any aspects of inspection not performed in previous stages of assembly.

The emitter assembly 28 may contain several emitters (constituted by speakers), positioned for optimum results.

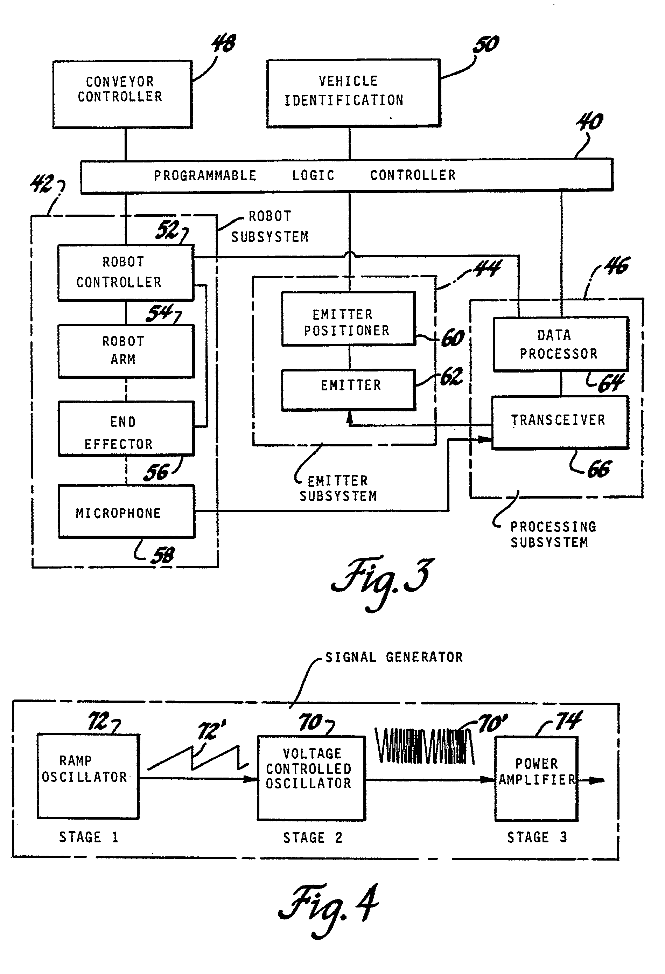

The interconnection of the equipment is depicted in the sub-system block diagram of Figure 3. A programmable logic controller 40, such as that available in the USA under the designation Allen-Bradley PLC model number 2/30, co-ordinates the sub-systems including a robot sub-system 42, an emitter sub-system 44 and a processing sub-system 46. A plurality of robot sub-systems is preferred, even though only one is shown.

The controller 40 has further connections to such devices as a conveyor controller 48 for positioning the body in the station, and an automatic vehicle identification device 50 for instructing the robot which of several pre-programmed paths to follow for the current body. The robot sub-system may employ a robot available in the USA under the designation Asea IRB/60, for example, and comprises a robot controller 52 and a robot arm 54 with an end effector 56 and microphone 58. The robot controller is electrically connected to the programmable controller 40 and to the end effector 56. The emitter sub-system 44 includes a motor-controlled slide (emitter positioner) 60 and a speaker (emitter) 62.

The processing sub-system 46 includes a computer 64 such as the data processor available in the USA under the designation Motorola VME, and an ultrasonic transceiver 66 which is connected to both the microphone 58 and the emitter 62. The data processor 64 is coupled to the controller 40 and to the robot controller 52.

The computer 64 constituted by the data processor is responsive to the robot controller output and to the microphone signal, and is programmed to detect a leak when the microphone signal increases to a level above the background noise, and to determine the leak location on the basis of which robot corresponds to the detected leak, the time of the leak detection, and the robot position at the time of the leak detection. When a battery-operated emitter assembly 28 is used, the emitter control can be included in the assembly.

A variant of the leak detection system (not illustrated in the drawings) comprises placing the emitters outside the body under robot control and placing the receivers inside the body, with each emitter being driven in a frequency range different from the others and the receivers each being tuned to a particular range. This allows separation of signals to avoid cross-talk, and permits computer identification of a seal leak location.

A major problem in prior attempts at ultrasonic leak detection was the development of standing waves in the body cavity under examination, so that the seal areas were non-uniformly irradiated by sonic energy, and some regions received nearly no irradiation. This problem is overcome, in conformity with the present invention, by rapidly and repeatedly sweeping the emitted frequency over a band-width sufficient to break up or prevent the standing wave pattern. A band-width of 6 kHz has been found adequate, with narrower band-widths resulting in reduced effectiveness.

The swept frequency, also known as a chirp signal, is produced by the circuit shown in Figure 4. This circuit comprises a voltage-controlled oscillator (VCO) 70 which is connected to the output of a ramp oscillator 72 and drives a power amplifier 74 that is coupled to the emitter. Figure 4 also illustrates the ramp oscillator signal, designated 72′, and the VCO output signal, designated 70′, which is the same as the emitter output. The ramp voltages are selected such that the VCO frequency varies over a 6 kHz band at a desired centre frequency; a ramp frequency of about 200 Hz yields a useful chirp rate.

A triangular waveform can alternatively be used, instead of the ramp signal.

The emitter may be a transducer available in the USA under the designation Polaroid electrostatic transducer, or an emitter available in the USA under the designation Massa ultrasonic air transducer model no. E-153 Type 75. The receiver is preferably an emitter available in the USA under the designation Bruel and Kjaer model number 4135 air condenser microphone.

Figure 5 shows a welded panel 76 having a joint 78 covered by a sealant 80, with an emitter 82 on one side of the panel and a receiver 84 on the other side adjacent the joint 78. The receiver 84 has a cylindrical receptor 86 with a 12.7 mm (1/2 inch) diameter, and a short length of 12.7 mm (1/2 inch) internal diameter rubber hose extension 88 on the receptor. During the scanning operation, the end of the extension is maintained at a distance of 12.7 mm (1/2 inch) from the panel 76. In the event of accidental contact, the rubber hose prevents damage to the receiver and the body.

The receiver is normally responsive to a wide angle of sound direction; however, the extension limits the incoming sound to a small angle. The receiver thus becomes highly directional, and is insensitive to background noise, even to sound from the emitter 82 which travels around the edge of the panel instead of through the joint.

However, if the receiver is within 50.8 mm (2 inches) of the edge of a panel, noise from the emitter travelling around the edge can be significant. Two methods are available to avoid difficulty arising from this noise, namely the provision of a shield to block the noise, or the use of electronic time discrimination to reject the noise which takes a long path from the emitter to the receiver.

If the emitter is more than 50.8 mm (two inches) from an edge or opening, the noise amplitude reaching the receiver is too small to introduce any difficulty.

Another major problem which arose in connection with prior attempts was that the ultrasonic testing failed to detect many of the smaller leaks, and especially those which had a tortuous shape, as in a glass-support moulding. It was discovered that the limitation was imposed by the standard practice of operation at a frequency of 40 kHz. It was further discovered that operation in the frequency range of 65 to 80 kHz resulted in the detection of 50% more leaks than at the frequency of 40 kHz, with the additional leaks detected being the smaller ones and the tortuous-path leaks. The signal-to-noise ratio for the preferred range is better than for the 40 kHz frequency, since the noise transmitted through the panel is much less in the 70 kHz region. Above a frequency of 80 kHz, however, the signal-to-noise ratio decreases.

At the preferred centre frequency of 70 khz, the 6 kHz band-width results in operation at frequencies between 67 and 73 kHz. At the chirp rate of 200 cycles per second, a scanning rate of 305 to 457 mm per second (12 to 18 inches per second) yields optimum results. This assumes the use of the highly directional receiver described above, which can resolve the position of a leak to within a few mm (a fraction of an inch).

The limiting factor in obtaining leak position information is the accuracy of the robot which provides information on the receiver position at the time of leak detection.

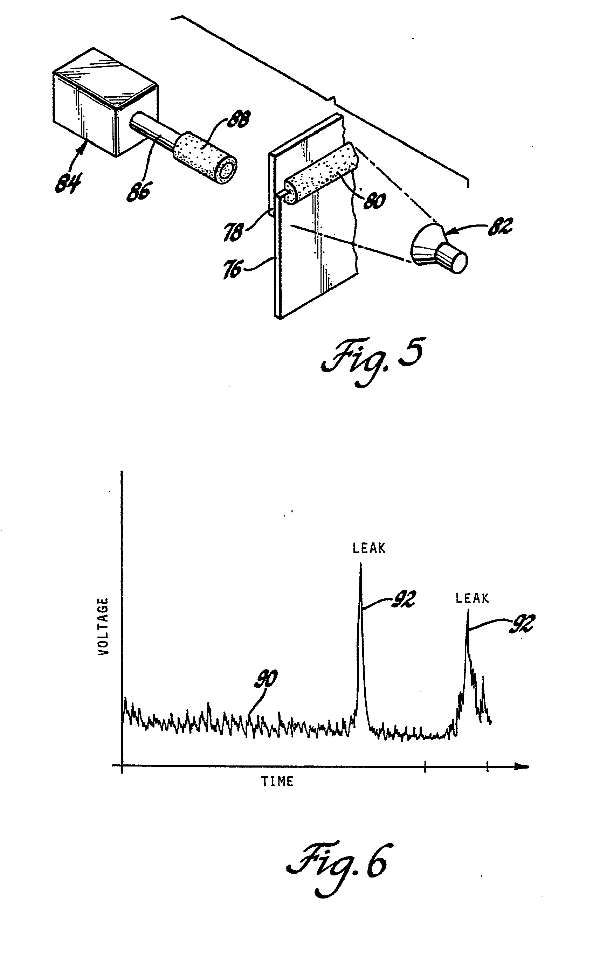

As is shown in Figure 6, which is a graph of received ultrasonic energy converted to DC voltage, background noise appears as low-amplitude waveforms 90, and the leak signals are sharp, well-defined, high-amplitude waveforms 92. Thus the time at which a leak is detected can be determined accurately.

The position of the receiver along the seam is determined by information from the robot controller 52, with standard robot controllers yielding such position information to a resolution of about 38 mm (1 1/2 inches).

As the robot scans the receiver along the seam under control of the path program provided by the vehicle identification module 50 and the programmable logic controller 40, the data processor 64 identifies a leak signal received from the emitter 62 and correlates the time of that signal with position data from the controller 52 of the robot sub-system which detected the leak. In that manner, the portion of a seal which requires repair is identified. The information is also stored and analysed for quality control purposes, to reveal patterns of leak occurrences which indicate a need for adjustments in the assembly equipment or procedures.

The present invention thus provides an ultrasonic leak detection method and apparatus which are especially useful for the inspection of seals on vehicle bodies, and which are effective to find leaks and their positions rapidly and automatically.

The robot effects control of the scanning by constraining the scanning to occur along a predetermined path.

## Claims

1. An apparatus for detecting leaks in an automotive vehicle body, comprising: a first transducer comprising an ultrasonic emitter (28); means (70, 72, 74) for driving the emitter to sweep the emitted energy through a band-width frequency range having a centre frequency of at least about 65 kHz; a second transducer comprising an ultrasonic receiver! (32) responsive to the emitted energy; robot means (30) for scanning one of the transducers (28, 32) along a predetermined path outside the body (10) to define a moving localised inspection zone, and with the other of the transducers (28, 32) being located inside the body (10), such that the ultrasonic energy is received by the receiver (32) at a low level if no leak is present in the inspection zone whereas if the inspection zone is moved to a leak location an increase in received energy is detected, resulting from the presence of a leak; and a computer (24) coupled to the robot means (30) and to the receiver (32) and programmed to respond to the detection of an increase in received energy resulting from a leak and to identify the location of the leak.

2. An apparatus according to claim 1, characterised in that the emitter (28) is driven to repeatedly sweep the emitted energy through a frequency range of about 6 kHz and having a centre frequency between about 65 and 80 kHz, and that the scan rate of the robot means (30) is less than 457 mm per second (18 inches per second).

3. An apparatus according to claim 1, characterised in that the band-width frequency range comprises the range 65 to 80 kHz, and that the centre frequency is 70 kHz.

4. An apparatus according to claim 2 or 3, characterised in that the sweeping of the emitted energy through a frequency range is effected by means of circuitry including a ramp oscillator (72) having a ramp frequency of about 200 Hz.

5. An apparatus according to any one of claims 1 to 4, characterised in that the body (10) is closed, the robot means (30) scans the receiver (32) along the body exterior, and the emitter (28) is located inside the body (10).

6. An apparatus according to any one of claims 1 to 4, characterised in that:

a set of ultrasonic emitters (28) as aforesaid is located outside the body (10), with each emitter (28) being operated in a different frequency band; the robot means (30) comprises a plurality of robots each for scanning one of the emitters (28) along a predetermined path outside the body (10) to define moving inspection zones;

a plurality of ultrasonic receivers (32) as aforesaid are responsive each to one of the emitter frequency bands and are located inside the body (10) so that the ultrasonic energy is received by a receiver (32) at a low level if no leak is encompassed by any inspection zone whereas if an inspection zone is moved to a leak location an increase in received energy occurs; and

the computer (24) is coupled to the robots: and to the receivers (32) and programmed, in response to the detection of a leak, to identify the receiver (32) of the increased energy, for identifying the location of the leak.

7. A method of detecting leaks in a vehicle body having seals for closing air paths representing potential leakage paths between the inside and outside of the body, comprising the steps of:

irradiating the seals (80) on either side of the body (10) with ultrasonic energy having a frequency of at least about 65 kHz;

repetitively sweeping the ultrasonic energy through a frequency range;

sensing the energy passed through the body (10) whereby the sensed energy is low in the absence of a leak and measurably higher in the presence of a leak; and

determining the location of a leak as well as the presence of a leak by limiting either the irradiating action or the sensing action to a local region, moving the local region along the seal, and correlating the time of sensing high energy with a leak location.

8. A method according to claim 7, characterised in that the method is carried out by:

irradiating seals (80) inside the body (10) with ultrasonic energy having a frequency of at least about 65 kHz;

repetitively sweeping the ultrasonic energy through a frequency range having a band-width of the order of 6 kHz;

sensing the energy passed through the body (10) in a localised inspection zone, whereby the sensed energy is low in the absence of a leak and measurably higher in the presence of a leak; and

determining the location of a leak as well as the presence of a leak by moving the inspection zone along the seal (80), and correlating the detection of high energy with a leak location.

9. A method according to claim 7 or 8, characterised in that the sweeping of the ultrasonic energy through a frequency range is effected by means of circuitry including a ramp oscillator (72) having a ramp frequency of about 200 Hz.

**Revendications**

1. Appareil de détection de fuites dans une carrosserie d'un véhicule automobile, comprenant:

un premier transducteur comportant un émetteur ultrasonore (28),

un dispositif (70, 72, 74) de pilotage d'émetteur afin qu'il fasse varier l'énergie émise dans une bande de fréquences ayant une certaine largeur et ayant une fréquence centrale au moins égale à 65 kHz environ, un second transducteur comprenant un récepteur ultrasonore (32) sensible à l'énergie émise, un dispositif à robot (30) destiné à balayer l'un des transducteurs (28, 32) suivant un trajet prédéterminé en dehors de la carrosserie (10) de manière qu'une zone localisée mobile d'inspection soit formée, l'autre des transducteurs (28, 32) étant placé à l'intérieur de la carrosserie (10) afin que l'énergie ultrasonore soit reçue par le récepteur (32) avec une faible intensité lorsqu'aucune fuite n'est présente dans la zone d'inspection alors que, si la zone d'inspection a été mise à un emplacement de fuites, une augmentation de l'énergie reçue est détectée, du fait de la présence d'une fuite,

et un ordinateur (24) couplé au dispositif à robot (30) et au récepteur (32) et programmée afin qu'il réponde à la détection d'une augmentation d'énergie reçue résultant d'une fuite et identifie l'emplacement de la fuite.

2. Appareil selon la revendication 1, caractérisé en ce que l'émetteur (28) est piloté afin qu'il assure une variation répétée de l'énergie émise dans une bande de fréquences d'environ 6 kHz de largeur, ayant une fréquence centrale comprise entre environ 65 et 80 kHz, et la vitesse de balayage assurée par le dispositif à robot (30) est inférieure à 457 mm/s (18 pouces par seconde).

3. Appareil selon la revendication 1, caractérisé en ce que la bande de fréquences est comprise entre 65 et 80 kHz, et la fréquence centrale est égale à 70 kHz.

4. Appareil selon la revendication 2 ou 3, caractérisé en ce que la variation d'énergie émise dans une bande de fréquences est réalisée à l'aide d'un circuit comprenant un oscillateur (72) à signal variant progressivement, ayant une fréquence de variation progressive d'environ 200 Hz.

5. Appareil selon l'une quelconque des revendications 1 à 4, caractérisé en ce que la carrosserie (10) est fermée, le dispositif à robot (30) balaie le récepteur (32) le long de l'extérieur de la carrosserie, et l'émetteur (28) est placé à l'intérieur de la carrosserie (10).

6. Appareil selon l'une quelconque des revendications 1 à 4, caractérisé en ce que:

un jeu d'émetteurs ultrasonores (28) tel qu'indiqué est placé à l'extérieur de la carrosserie (10), chaque émetteur (28) étant commandé dans une bande différente de fréquences,

le dispositif à robot (30) comporte plusieurs robots destinés chacun à balayer l'un des émetteurs (28) suivant un trajet prédéterminé à l'extérieur de la carrosserie (10) afin que des zones mobiles d'inspection soient délimitées,

plusieurs récepteurs ultrasonores (32) tels qu'indiqués sont commandés chacun dans l'une des bandes de fréquences d'un émetteur, et sont placés à l'intérieur de la carrosserie (10) afin que l'énergie ultrasonore soit reçue par un récepteur (32) avec un faible niveau lorsque qu'aucune fuite n'est comprise dans une zone d'inspection alors que, si une zone d'inspection se déplace sur un emplacement de fuite, une augmentation de l'énergie reçue apparaît, et

l'ordinateur (24) est couplé aux robots et aux récepteurs (32) et est programmé de manière que, à la suite de la détection d'une fuite, il identifie le récepteur (32) indiquant l'énergie accrue et permette l'identification de l'emplacement de la fuite.

7. Procédé de détection de fuites d'une carrosserie de véhicule ayant des joints destinés à fermer les trajets de passage d'air représentant des trajets de fuites potentielles entre l'intérieur et l'extérieur de la carrosserie, le procédé comprenant les étapes suivantes:

l'irradiation des joints d'étanchéité (80) d'un côté ou de l'autre de la carrosserie (10) par de l'énergie ultrasonore ayant une fréquence d'au moins 65 kHz,

la variation répétée de la fréquence de l'énergie ultrasonore dans une bande de fréquences, la détection de l'énergie traversant la carrosserie (10), l'énergie détectée étant faible en l'absence d'une fuite et plus élevée de manière mesurable en présence d'une fuite, et

la détermination de l'emplacement d'une fuite ainsi que de la présence d'une fuite par limitation de l'action d'irradiation ou de l'action de détection à une région locale, par déplacement de la région locale le long du joint d'étanchéité, et par détermination de la corrélation entre le moment de la détection d'une quantité élevée d'énergie et l'emplacement d'une fuite.

8. Procédé selon la revendication 7, caractérisé en ce qu'il est mis en oeuvre à l'aide des étapes suivantes:

l'irradiation de joints d'étanchéité (80) à l'intérieur de la carrosserie (10) avec une énergie ultrasonore ayant une fréquence d'au moins 65 kHz environ,

la variation répétée de la fréquence de l'énergie ultrasonore dans une bande de fréquences ayant une largeur de l'ordre de 6 kHz,

la détection de l'énergie traversant la carrosserie (10) dans une zone localisée d'inspection, l'énergie détectée étant faible en l'absence d'une fuite et plus élevée de manière mesurable en présence d'une fuite, et

la détermination de l'emplacement d'une fuite ainsi que de la présence d'une fuite par déplacement de la zone d'inspection le long du joint d'étanchéité (80), et par corrélation de la détection de la quantité élevée d'énergie à l'emplacement d'une fuite.

9. Procédé selon la revendication 7 ou 8, caractérisé en ce que la variation de fréquences de l'énergie ultrasonore dans une bande de fréquences est réalisée à l'aide d'un circuit comprenant un oscillateur (72) à signal variant progressivement, ayant une fréquence de variation progressive d'environ 200 Hz.

**Patentansprüche**

1. Vorrichtung zum Erfassen von Lecks in einer Kraftfahrzeug-Karosserie mit:

einem ersten einen Ultraschallsender (28) umfassenden Wandler;

Mitteln (70, 72, 74) zum Ansteuern des Senders, um die ausgesendete Energie durch einen Bandbreiten-Frequenzbereich zu wobbeln mit einer Mittenfrequenz von mindestens etwa 65 kHz;

einem zweiten Wandler mit einem Ultraschallempfänger (32), der auf die ausgesendete Energie reagiert;

Robotermittel (30) für eine Abtastbewegung der Wandler (28, 32) längs eines vorbestimmten Weges außerhalb der Karosserie (10), um eine sich bewegende lokalisierte Inspektionszone zu bestimmen, wobei der andere Wandler (28, 32) innerhalb der Karosserie (10) angeordnet ist, so daß die Ultraschallenergie durch den Empfänger (32) mit einem niedrigem Pegel empfangen wird, wenn kein Leck in der Inspektionszone vorhanden ist, während dann, wenn die Inspektionszone zu einer Leckstelle bewegt wird, ein Anstieg der empfangenen Energie erfaßt wird, der von der Anwesenheit eines Lecks herrührt; und

einem mit dem Robotermittel (30) und

dem Empfänger (32) gekoppelten Computer (24), der programmiert ist, auf eine Erfassung eines Anstiegs der empfangenen Energie infolge eines Lecks zu reagieren und den Ort des Lecks zu identifizieren.

2. Vorrichtung nach Anspruch 1, dadurch gekennzeichnet, daß der Sender (28) angesteuert wird, wiederholt die ausgesendete Energie durch einen Frequenzbereich von etwa 6 kHz mit einer Mittenfrequenz zwischen etwa 65 und 80 kHz zu wobbeln, und daß die Abtastrate des Robotermittels (30) weniger als 457 mm/s (18 inch pro s) beträgt.

3. Vorrichtung nach Anspruch 1, dadurch gekennzeichnet, daß der Bandbreiten-Frequenzbereich den Bereich von 65 bis 80 kHz umfaßt, und daß die Mittenfrequenz 70 kHz beträgt.

4. Vorrichtung nach Anspruch 2 oder 3, dadurch gekennzeichnet, daß das Wobbeln der ausgesandten Energie durch einen Frequenzbereich durch Schaltungsmittel bewirkt wird einschließlich eines Sägezahnoszillators (72) mit einer Sägezahnfrequenz von etwa 200 Hz.

5. Vorrichtung nach einem der Ansprüche 1 bis 4, dadurch gekennzeichnet, daß die Karosserie (10) geschlossen ist, daß das Robotermittel (30) den Empfänger (32) längs des Karosserie-äußeren zur Abtastung bewegt, und daß der Sender (28) innerhalb der Karosserie (10) angeordnet ist.

6. Vorrichtung nach einem der Ansprüche 1 bis 4, dadurch gekennzeichnet, daß: eine

Reihe von Ultraschallsendern (28) der erwähnten Art außerhalb der Karosserie (10) angeordnet ist, wobei jeder Sender (28) in einem unterschiedlichen Frequenzband betrieben wird;

das Robotermittel (30) eine Vielzahl von Robotern umfaßt, jeweils einen für eine Abtastbewegung eines Senders (28) längs eines vorbestimmten Weges außerhalb der Karosserie (10), um sich bewegende Inspektionszonen zu bestimmen;

eine Vielzahl von Ultraschallempfängern (32) der erwähnten Art jeweils auf ein Senderfrequenzband anspricht und daß diese innerhalb der Karosserie (10) so angeordnet ist, daß die Ultraschallenergie durch einen Empfänger mit niedrigem Pegel empfangen wird, falls kein Leck durch eine Inspektionszone umfaßt wird, während dann, wenn eine Inspektionszone zu einer Leckstelle bewegt wird, ein Anstieg der empfangenen Energie auftritt; und

der Computer (24) mit den Robotern und den Empfängern (32) gekoppelt und programmiert ist, in Abhängigkeit von der Erfassung eines Lecks den Empfänger (32) der erhöhten Energie zu identifizieren, um die Leckstelle zu identifizieren.

7. Verfahren zum Erfassen von Lecks bei einer Fahrzeug-Karosserie mit Dichtungen zum Abschließen von Luftwegen, die mögliche Leckwege zwischen dem Inneren und äußeren der Karosserie darstellen, mit den Schritten:

die Dichtungen (80) werden an beiden Seiten der Karosserie (10) mit Ultraschallenergie mit einer Frequenz von mindestens etwa 65 kHz bestrahlt:

die Ultraschallenergie wird wiederholt durch einen Frequenzbereich gewobbelt;

es wird die durch die Karosserie (10) hindurchgeleitete Energie erfaßt, wobei die erfaßte Energie bei Abweseneheit eines Lecks niedrig und bei Vorhandensein eines Lecks meßbar höher ist; und es wird die Stelle eines Lecks wie auch das Vorhandensein eines Lecks bestimmt durch Begrenzen entweder der Bestrahlungswirkung oder der Erfassungswirkung auf einen lokalen Bereich, durch Bewegen des lokalen Bereichs längs des Dichtung und durch Korrelieren des Zeitpunkts des Erfassens hoher Energie mit einer Leckstelle.

8. Verfahren nach Anspruch 7, dadurch gekennzeichnet, daß das Verfahren dadurch ausgeführt wird, daß:

Dichtungen (80) von der Innenseite der Karosserie (10) mit Ultraschallenergie mit einer Frequenz von mindestens etwa 65 kHz bestrahlt werden;

die Ultraschallenergie wiederholt durch einen Frequenzbereich mit einer Bandbreite in der Größenordnung von 6 kHz gewobbelt wird; die durch die Karosserie (10) in einer begrenzten Inspektionszone hindurchgelassene Energie erfaßt wird, wobei die erfaßte Energie bei Abwesenheit eines Lecks niedrig und bei Vorhandensein eines Lecks meßbar höher ist; und

die Stelle eines Lecks wie auch das Vorhandensein des Lecks dadurch bestimmt wird, daß die Inspektionszone längs einer Dichtung (80) bewegt und die Erfassung hoher Energie mit einer Leckstelle korreliert wird.

9. Verfahren nach Anspruch 7 oder 8, dadurch gekennzeichnet, daß das Wobbeln der Ultraschallenergie durch einen Frequenzbereich mittels einer Schaltung bewirkt wird, die einen Sägezahnoszillator (72) mit einer Sägezahnfrequenz von etwa 200 Hz enthält.

Fig. 1

Fig.2

*Fig.3*

*Fig.4*

Fig. 5

Fig. 6